# EUROPEAN PATENT SPECIFICATION

(11) **EP 4 357 172 B1**
(45) Date of publication and mention of the grant of the patent: **16.07.2025**
(21) Application number: 22202418.4
(22) Date of filing: 19.10.2022
(51) Int. Cl.: B60J 3/00, B62D 33/06

(54) **AN INDUSTRIAL VEHICLE SUN PROTECTOR**
INDUSTRIEFAHRZEUG-SONNENSCHUTZ
PARE-SOLEIL POUR VÉHICULE INDUSTRIEL

(43) Date of publication of application: 24.04.2024
(73) Proprietor: Ammann Schweiz AG, 4900 Langenthal (CH)
(72) Inventor: PRASAD, Pramod, 560090 Bangalore (IN); KUMAR, Nishanth, 560097 Bangalore (IN)
(74) Representative: Eisenführ Speiser

(56) References cited:
- CH-A- 349 176
- DE-U1- 202012 003 669
- FR-E- 32 476
- GB-A- 335 321

## Description

### TECHNICAL FIELD

The disclosure relates generally to a sun protector. In particular aspects, the disclosure relates to an industrial vehicle sun protector. The disclosure can be applied in heavy-duty vehicles, such as construction equipment, for example pavers. Although the disclosure may be described with respect to a particular vehicle, the disclosure is not restricted to any particular vehicle.

### BACKGROUND

In tropical regions, the ambient temperature is often very high, and sunlight may strike directly onto an operator of an industrial vehicle, which causes inconvenience to the operator while performing a work operation. However, also in other regions of the world, be it during summer time or other time of the year, being stricken by direct sunlight may be cause inconvenience for an operator. To protect operators, some industrial vehicles are provided with sun shades. However, there is still room for improvement. Document FR 32 476 E discloses an example of a rotating sun shade, while DE 20 2012 003669 U1 shows an industrial vehicle with a sliding sun shade.

### SUMMARY

According to a first aspect of the disclosure, there is provided an industrial vehicle sun protector for the protection of an operator located in the cabin of an industrial vehicle. The industrial vehicle sun protector comprises:
- a mounting arrangement configured to be installed in the cabin of an industrial vehicle,
- a rigid shade member for obstructing the passage of sun rays therethrough, the shade member being pivotably connected to the mounting arrangement such that the shade member is pivotable between a stored position and different selectable deployed positions, wherein adjustment from one of the deployed positions to another one of the deployed positions allows for protecting the operator from sun rays at different positions of the sun,
- wherein a pivoting of the shade member from the stored position to any one of the different selectable deployed positions results in an angular displacement of the shade member greater than 90°. The first aspect of the disclosure may seek to overcome the problem of the sun being in different positions at different times of the day, and at different times of the year, and thus the angle at which the sun rays strike the industrial vehicle varies over time. A technical benefit may include that by allowing the shade member to be provided in different selectable deployed positions, an operator may select the deployed position that currently provides the most adequate protection against the sun rays. During the day, the operator may, if desired, change the sunshade to another deployed position which may now be better adapted to the changed position of the sun. By having an angular displacement from the stored position to any one of the different selectable positions which is greater than 90°, then even a horizontal stored position may achieve a vertical deployed position which may provide good sun protection.

In some examples, said different selectable deployed positions comprise a plurality of discrete predefined deployed positions. A technical benefit may include that providing a plurality of discrete predefined deployed positions may be relatively easy from a technical point of view. For example, there may be a mechanism which includes a number of selectable latching positions, such as a protrusion to be engaged with different recesses to provide different latching positions (or conversely, a recess to be engaged with different protrusions to provide different latching positions). Although having discrete predefined deployed positions may be advantageous, this disclosure is not limited to that. Indeed, in in some examples, said different selectable deployed positions may be selected in a stepless manner. For example, there may be a mechanism in which a protrusion may run in a track and be locked in position at any selected position of such a track.

In some examples, a pivoting of the shade member from the stored position to any one of the different selectable deployed positions results in an angular displacement of the shade member within a range of 130° - 185°. A technical benefit may include that even though the stored position may be a horizontal position so as to keep the shade member well out of the way when not in use, an angular displacement range of 130° - 185° may provide for good sun protection throughout normal working hours.

In some examples, said different selectable deployed positions comprise at least three discrete predefined positions:
a first deployed position at a pivoting angle within the range of 130°-140° relative to the stored position, such as 135° relative to the stored position,
a second deployed position at a pivoting angle within the range of 145°-155° relative to the stored position, such as 150° relative to the stored position, and
a third deployed position at a pivoting angle within the range of 175°-185° relative to the stored position, such as 180° relative to the stored position. A technical benefit may include that these three deployed positions allow for an operator to select a deployed position and change to a different deployed position during the day, and thereby obtaining appropriate sun protection throughout a normal working day.

In some examples, said mounting arrangement comprises a hook-shaped hinge and a locking member, wherein the shade member is fixedly connected to the hook-shaped hinge and follows the movements of the hook-shaped hinge, wherein the hook-shaped hinge is pivotably connected to the locking member, and is lockable to the locking member in different rotational positions relative to the locking member, said different rotational positions corresponding respectively to the stored position and the different selectable deployed positions of the shade member. A technical benefit may include that a hook-shaped hinge may allow the shade member to extend substantially horizontally when in the stored position (for instance extend adjacent to the inside of the roof), while also allowing the shade member to rotate around, past the edge of the roof such that it can be located and held outside of the cabin in the different deployed positions.

In some examples, one of said hook-shaped hinge and said locking member is provided with a locking pin, wherein the other one of said hook-shaped hinge and said locking member is provided with a pattern of holes or recesses that present a plurality of areas for receiving the locking pin, wherein the locking pin is selectively insertable into any one of said areas to lock said hook-shaped hinge in a desired one of said different rotational positions relative to the locking member. A technical benefit may include that this provides for a simple yet effective way of locking the shade member in the stored position or in any one of the deployed positions. It should be understood that in some examples, the locking pin may be provided on the hook-shaped hinge and the pattern of holes or recesses may be provided in the locking member, whereas in other examples, the locking pin may be provided in the locking member and the pattern of holes or recesses may be provided in the hook-shaped hinge. Either component having the pattern of holes or recesses may, for example, be plate-like, although other configurations are readily conceivable.

In some examples, the hook-shaped hinge has a first end portion, a second end portion, and an intermediate portion located between the first end portion and the second end portion, wherein the first end portion and the second end portion extend at an angle relative to each other. A technical benefit may include that this may allow the shade member to be conveniently stored out of the way and yet allowing the shade member to rotate around, past the edge of the roof such that it can be located and held outside of the cabin in the different deployed positions.

In some examples, the pivotable connection between the hook-shaped hinge and the locking member is located at the first end portion of the hook-shaped hinge, wherein the fixed connection between the shade member and the hook-shaped hinge is located at the second end portion of the hook-shaped hinge. Similarly to above, a technical benefit may include that the shade member may be conveniently stored out of the way and yet allowing the shade member to rotate around, past the edge of the roof such that it can be located and held outside of the cabin in the different deployed positions.

In some examples, the mounting arrangement comprises at least another pivotable hook-shaped hinge, wherein the shade member is fixedly connected to said at least another pivotable hook-shaped hinge. A technical benefit may include that this provides more robustness when switching between the different positions of the shade member. Although it is conceivable to let said at least another hook-shaped hinge be lockable to another locking member, similarly to the previously discussed interlocking between the previously mentioned hook-shaped hinge and locking member, it may suffice that only one of the hook-shaped hinges are locked to a locking member.

In some examples, the mounting arrangement comprises at least one spring device, such as a gas spring, wherein the spring device accumulates potential energy when the shade member is pivoted towards the stored position and wherein the spring device releases potential energy when the shade member is pivoted away from the stored position. A technical benefit may include that less effort is needed from the operator to move the shade member from its stored position to any one of its deployed positions.

In some examples, the spring device has a first end connected to a remote connection point of the mounting arrangement, and a second end connected to said another pivotable hook-shaped hinge. A technical benefit may include that this may provide increased safety to an operator when the operator wants to lock the shade member in one of its positions, with reduced risk of interfering with the action of the spring device.

According to a second aspect of the disclosure, there is provided an industrial vehicle comprising a cabin for an operator and the industrial vehicle sun protector of the first aspect, including any example thereof, wherein the mounting arrangement of the industrial vehicle sun protector is installed in the cabin. The second aspect of the disclosure may seek to address the same matters as the first aspect, and technical benefits may include the technical benefits discussed in connection with the first aspect, including any example thereof.

In some examples,
- in the stored position, the shade member is located inside the cabin, and
- in each one of the different selectable deployed positions, the shade member is located outside the cabin and is positioned relative to an opening in the cabin to provide an obstruction to sun rays through the opening and thereby restrict passage of sun rays through the opening and onto an operator located in the cabin. A technical benefit may include that it may be convenient to store the shade member within the cabin when it is not used, and then being able to move it to the outside of the cabin for sun protection when needed. The opening in the cabin may suitably be a lateral opening, i.e. an opening facing transversely to the driving direction. Such a lateral opening will normally be the opening through which an operator steps into the cabin.

In some examples, in the stored position, the shade member is held in parallel with and adjacent to the roof of the industrial vehicle. A technical benefit may include that in the stored position, the shade member may be kept adequately out of the way, not forming an obstruction to the operator, while still allowing the shade member to be moved to deployed positions in which it provides good sun protection.

In some examples, the industrial vehicle further comprises another industrial vehicle sun protector such that the industrial vehicle comprises two oppositely disposed industrial vehicle sun protectors attached to the roof thereof. A technical benefit may include that the operator is protected from the sun from two directions, thus being less dependent on the current orientation of the vehicle.

In some examples of the first aspect or the second aspect, the rigid shade member may comprise a single piece of material. In some examples, the rigid shade member may be made from a molded material. A technical benefit may include that it provides a robust shade member which can easily be produced.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIGS. 1-4** are perspective views of an industrial vehicle equipped with an industrial vehicle sun protector according to one example, wherein a shade member of the industrial vehicle sun protector is illustrated in different positions.
**FIG. 5** is a front view of a cabin of the industrial vehicle, wherein different deployed positions of the shade member are illustrated.
**FIGS. 6-8** are different close-up views of the industrial sun protector mounted to a roof of the industrial vehicle, wherein different positions of the shade member are illustrated.

### DETAILED DESCRIPTION

Aspects set forth below represent the necessary information to enable those skilled in the art to practice the disclosure.

Operating an industrial vehicle may sometimes be a challenge for an operator as far as ambient conditions are concerned. High temperatures and direct sunlight may cause unnecessary inconvenience to an operator. To block the sun rays in an effective way throughout the working day is highly desirable. On the other hand, when there is no need to block any sun rays, it is desirable that any shading device used to block the sun can be conveniently stored and kept out of the way so that it avoids obstructing the operator's freedom to move around in the cabin. The present disclosure suggests providing an industrial vehicle sun protector in which a rigid shade member is pivotably connected to a mounting arrangement such that it can be pivoted at least 90° from a stored position to different selectable deployed positions. This allows for convenient storage of the shade member when not needed, while also allowing for adjusting the shade member based on the position of the sun when the operator wishes to block the sun rays.

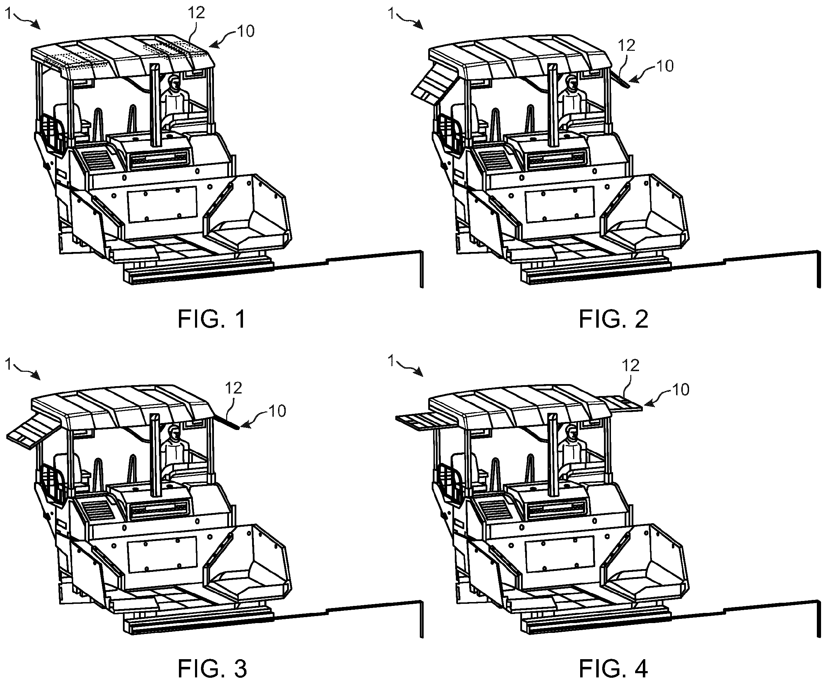

**FIGS. 1-4** are perspective views of an industrial vehicle 1 equipped with an industrial vehicle sun protector 10 according to one example, wherein a shade member 12 of the industrial vehicle sun protector 10 is illustrated in different positions. The industrial vehicle 1 in this example is a paver. It should, however, be understood that the industrial vehicle sun protector 10 may be mounted to other types of industrial vehicles as well. Furthermore, in **FIGS. 1-4** there is actually mounted two industrial vehicle sun protectors 10, one for the left side of the vehicle 1 and one for the right side of the vehicle 1. It should, however, be understood that the present disclosure is not limited to two sun protectors being mounted to a vehicle. In other examples, the industrial vehicle may be provided with an industrial vehicle sun protector on only one side, for example on a driver side where the operator/driver will spend most of the time in the vehicle.

**FIG. 1** illustrates a state in which the shade member 12 of the industrial vehicle sun protector 10 is in its stored position. In this example, in the stored position, the shade member 12 may be held in parallel with and adjacent to the roof of the industrial vehicle 1. In particular, as indicated by the dotted lines, the shade member 12 may, in the stored position, extend along the inside of the roof, i.e. within the driver's cabin of the vehicle 1. **FIG. 2** illustrates a state in which the shade member 12 is in a deployed position and extends at 135° relative to the stored position. In **FIG. 3****,** the shade member 12 has been moved even further to another deployed position, at 150° relative to the stored position. Finally, in **FIG. 4****,** the shade member 12 is in another deployed position, which may suitably be the most deployed position, extending at 180° relative to the stored position.

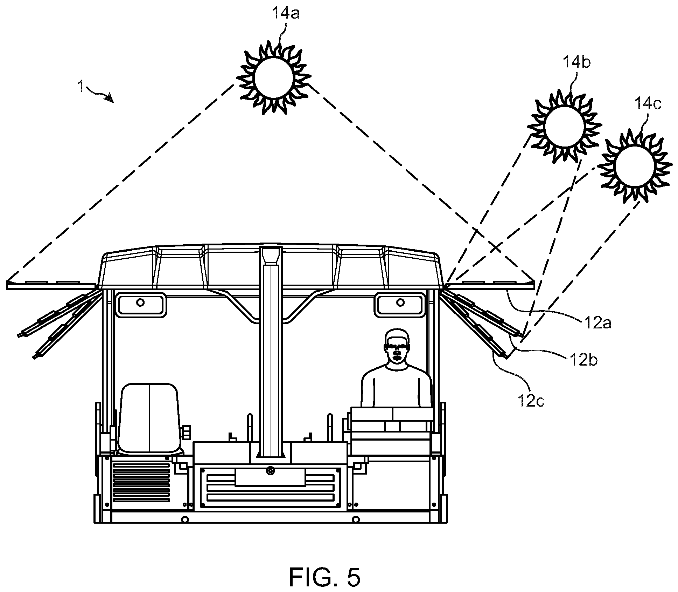

**FIG. 5** is a front view of a cabin of the industrial vehicle 1, wherein different deployed positions 12a-12c of the shade member are illustrated. The deployed positions 12a-12c shown in **FIG. 5** may correspond to those of **FIGS. 2-4****.** As can be seen in **FIG. 5** different positions 14a-14c of the sun during the day are illustrated. **FIG. 5** illustrates when the sun is at its highest position 14a, around noon. Although the roof of the vehicle will protect the operator from being directly hit by sun rays, it may be advantageous to move the shade member to a fully deployed position 12a (corresponding to **FIG. 4**), which is here illustrated as a substantially horizontal position. In this fully deployed position 12a, a large shade area is created around the vehicle 1. Hereby, the operator will be exposed to less heat radiation from the ground. Furthermore, oftentimes the operator may lean outside to have a view on the front of the vehicle 1, for example while unloading material in a hopper area. The fully deployed position 12a may thus allow the operator to still be in the shade even though he/she is leaning out through a lateral opening of the vehicle. Later in the afternoon the sun has moved to a slightly lower position 14b and the operator may now change to another deployed position 12b (corresponding to **FIG. 3**) to obstruct the sun rays from hitting the operator. The operator will normally select the deployed position at which the sun rays hit the shade member as perpendicularly as possible. As time passes, and the sun has moved further down to an even lower position 14c, the operator may again change to a different deployed position 12c (corresponding to **FIG. 2**). It should of course be understood that the deployed positions 12b and 12c may also be used early in the morning and later in the morning, as the sun rises from lower position 14c to position 14b.

It should be understood that although specific angles for the deployed positions have been discussed in relation to **FIGS. 2-5****,** other angles are also conceivable. For instance, in a general example, a pivoting of the shade member from the stored position to any one of the different selectable deployed positions may result in an angular displacement which is greater than 90°. For example, a pivoting of the shade member from the stored position to any one of the different selectable deployed positions may result in an angular displacement of the shade member within a range of 130° - 185°. For instance, said different selectable deployed positions may comprise at least three discrete predefined positions:
a first deployed position at a pivoting angle within the range of 130°-140° relative to the stored position, such as 135° relative to the stored position,
a second deployed position at a pivoting angle within the range of 145°-155° relative to the stored position, such as 150° relative to the stored position, and
a third deployed position at a pivoting angle within the range of 175°-185° relative to the stored position, such as 180° relative to the stored position.

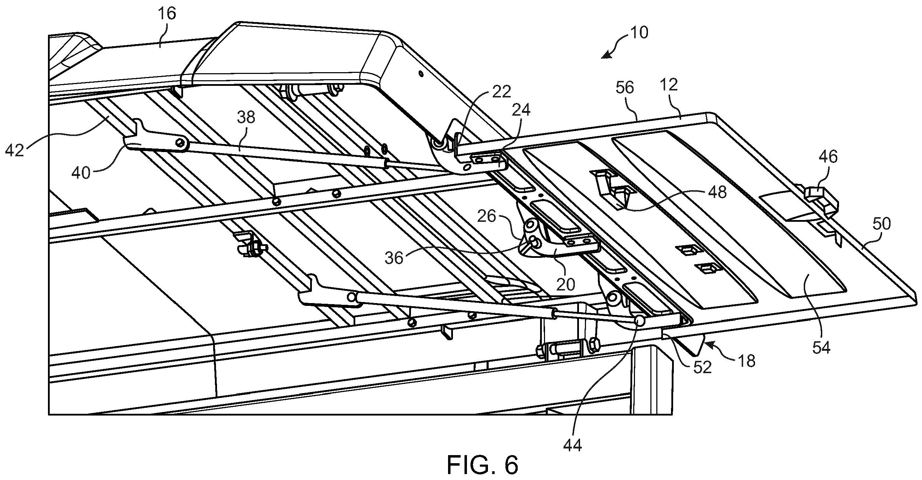

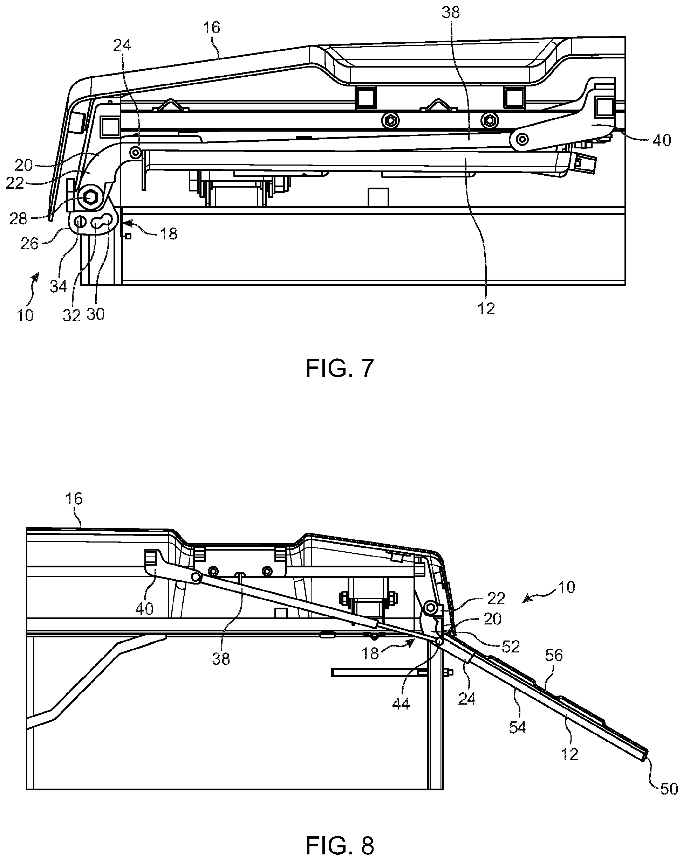

Turning now to **FIGS. 6-8** the industrial vehicle sun protector 10 will be discussed in more detail. It should be noted that **FIG. 7** is a view seen from an opposite side compared to the views in **FIGS. 6** **and** **8****.**

**FIGS. 6-8** are different close-up views of the industrial vehicle sun protector 10 mounted to a roof 16 of the industrial vehicle, wherein different positions of the shade member 12 are illustrated. The industrial vehicle sun protector 10 may, for example, be the one illustrated in connection with **FIGS. 1-4****,** and the industrial vehicle may, for example, be the vehicle illustrated in **FIGS. 1-4****.**

The industrial vehicle sun protector 10 is configured to protect an operator located in the cabin of an industrial vehicle. The industrial vehicle sun protector 10 shown in **FIGS. 6-8** comprises a mounting arrangement 18 configured to be installed in the cabin of the industrial vehicle. The industrial vehicle sun protector 10 also comprises the rigid shade member 12 configured to obstruct the passage of sun rays therethrough. The shade member 12 is pivotably connected to the mounting arrangement 18 such that the shade member 12 is pivotable between a stored position and different selectable deployed position. For instance, the different selectable deployed positions may be the positions illustrated in **FIGS. 2-5****,** however, other deployed positions are of course also conceivable. Furthermore, the number of deployed positions, may be fewer than the three shown in the previous figures, i.e. two deployed position, or may be more, such as four, five of even more deployed positions. In some examples, the deployed positions may be steplessly selectable, while in other examples, the deployed positions may be discretely selectable. In any one of the above examples of different deployed positions, the adjustment from one of the deployed position to another one of the deployed positions allows for protecting the operator from sun rays at different positions of the sun. A pivoting of the shade member 12 from the stored position to any one of the different selectable deployed positions results in an angular displacement of the shade member 12 greater than 90°.

As can be seen in **FIG. 6****,** the mounting arrangement 18 may comprise one or more hook-shaped hinges 20 to enable the pivoting of the shade member 12. In the illustrated example the mounting arrangement 18 has three hook-shaped hinges 20, but other number of hinges are also conceivable. The shade member 12 is fixedly connected to the hook-shaped hinges 20 and follows the movements of the hook-shaped hinges 20. As shown in **FIGS. 6-8****,** each hook-shaped hinge 20 has a first end portion 22, a second end portion 24, and an intermediate portion located between the first end portion 22 and the second end portion 24. The first end portion 22 and the second end portion 24 extend at an angle relative to each other. The fixed connection between the shade member 12 and each hook-shaped hinge 20 may be located at the second end portion 24 of the hook-shaped hinge 20.
The mounting arrangement 18 further comprises a locking member 26 (best seen in **FIG. 7**). At least one of the hook-shaped hinges 20, in this case the central hook-shaped hinge 20, may cooperate with such a locking member 26. More specifically, the hook-shaped hinge 20 may be pivotably connected to the locking member 26 and may be lockable to the locking member 26 in different rotational positions relative to the locking member. As can be seen in **FIG. 7****,** the pivotable connection 28 between the hook-shaped hinge 20 and the locking member 26 may be located at the first end portion 22 of the hook-shaped hinge 20.

The different lockable positions of the hook-shaped hinge 20 to the locking member 26 correspond respectively to the stored position and the different selectable deployed position of the shade member 12. In **FIG. 6****,** a fully deployed position of the shade member 12 is illustrated, extending substantially horizontally out from below the roof 16. The hook-shaped hinge 20 allows the shade member 12 to be located under the roof 16, extending substantially horizontally in its stored position and in parallel with the adjacent roof 16 (see **FIG. 7**), and then be swung around the edge of the roof and out through the cabin via a lateral opening of the cabin into any one of the deployed positions (see e.g. **FIGS. 6** **and** **8**). As best seen in **FIG. 7****,** the locking member 28 may be provided with a pattern of holes or recesses that present a plurality of receiving areas 30, 32, 34 for receiving a locking pin. In the present example, the locking member 28 is substantially plate-shaped and three such receiving areas 30, 32, 34 can be seen. The two receiving areas 30, 32 located close to each other correspond to the first and the second deployed positions, while the third recessed area 34 corresponds to the fully deployed position, i.e. the position shown in **FIG. 6****.**

As can be seen in **FIG. 6** the shade member 12 has been moved to the fully deployed position, and a locking pin 36 is indicated as extending through the hook-shaped hinge 20 and into the third receiving area 34 (that receiving area is shown in **FIG. 7**) of the locking member 26, thereby locking the shade member 12 in this fully deployed position. Although not seen in the drawings, the locking member 26 has a corresponding receiving area for locking the shade member 12 in the stored position (i.e. the position in **FIG. 7**).

As best seen in **FIGS. 6** **and** **8****,** the mounting arrangement 18 may comprise at least one spring device 38, such as a gas spring. In the illustrated example, the mounting arrangement 18 comprises two spring devices 38, one spring device 38 for the respective outer hook-shaped hinge 20. Thus, in the illustrated example, the central hook-shaped hinge 20, which cooperates with the locking member 26, is not associated with a spring device 38.

The spring device 38 may accumulate potential energy when the shade member 12 is pivoted towards the stored position. The spring device 38 may release potential energy when the shade member 12 is pivoted away from the stored position. This facilitates moving the shade member 12 from the stored position towards the selectable deployed positions. The spring device 38 may have a first end connected to a remote connection point 40 of the mounting arrangement 18 (in this example the remote connection point is at a beam 42 extending along or forming part of the roof 16), and a second end 44 connected to one of the hook-shaped hinges 20.

As best seen in **FIG. 6****,** the shade member 12 may suitably be provided with one or more handles 46, 48 in order to facilitate for the operator to move the shade member 12 between its different positions. For instance, there may be provided a first handle 46 at a distal end 50 of the shade member 12, i.e. the end which is opposite to the end connected to the one or more hook-shaped hinges 20, which in turn could be referred to as a proximal end 52. Such a first handle 46 may be grippable from the outside of the vehicle, as well as from the inside of the vehicle. The first handle 46 may, for example, be gripped when the shade member 12 is in its stored position. A second handle 48 may be provided on the shade member 12 on the operator-facing side 54, i.e. the side opposite to the sun-facing side 56 of the shade member 12. The second handle 48 may be conveniently be gripped by the operator from within the cabin when the shade member 12 is in one of the deployed positions. Other or further handle locations are also conceivable. From this disclosure, it can be understood that in the stored position, the operator-facing side 54 may face upwardly towards the roof 16, while the sun-facing side 56 will face downwardly away from the roof 16. As the shade member is pivoted through the deployed positions to the fully deployed position, the sun-facing side 56 will get closer and closer to facing upwardly in the straight vertical direction, while the operator-facing side 54 will get closer and closer to facing downwardly in the straight vertical direction. It should also be noted that in the deployed positions, the distal end 50 of the shade member 12 may be the portion of the shade member that is located furthest from the longitudinal center (roll axis) of the vehicle, while the proximal end 52 may be the portion of the shade member 12 that is located closest to the longitudinal center of the vehicle. However, in the stored position of the shade member 12, the distal end 50 may be located closest to the longitudinal center of the vehicle, while the proximal end 52 is located furthest therefrom.

From this disclosure, it may also be understood, that the path traveled by the distal end 50 when the shade member 12 is moved, is a path that follows an arc of a circle. For instance, when moving the shade member 12 from its stored position to its fully deployed position, the distal end 50 of the shade member 12 may follow a path which substantially corresponds to half a circle.

It should also be understood that for a hinge-shaped hook 20 to which the second end 44 of a spring device 38 is connected, the pivot axis of such a hinge-shaped hook 20 may be offset from the connecting point between the spring device 38 and the hinge-shaped hook 20, whereby a linear movement of the spring device 38 is transferred into a pivoting movement of the hinge-shaped hook 20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An industrial vehicle sun protector (10)
for the protection of an operator located in the
cabin of an industrial vehicle, comprising:
- a mounting arrangement (18) configured to be installed in the cabin of an industrial vehicle,
- a rigid shade member (12) for obstructing the passage of sun rays therethrough, the shade member being pivotably connected to the mounting arrangement such that the shade member is pivotable between a stored position and different selectable deployed positions, wherein adjustment from one of the deployed positions to another one of the deployed positions allows for protecting the operator from sun rays at different positions of the sun,
**characterized in that**
a pivoting of the shade member from the stored position to any one of the different selectable deployed positions results in an angular displacement of the shade member greater than 90°.

2. The industrial vehicle sun protector of claim 1, wherein said different selectable deployed positions comprise a plurality of discrete predefined deployed positions.

3. The industrial vehicle sun protector of any one of claims 1-2, wherein a pivoting of the shade member from the stored position to any one of the different selectable deployed positions results in an angular displacement of the shade member within a range of 130° - 185°.

4. The industrial vehicle sun protector of any one of claims 1-3, wherein said different selectable deployed positions comprise at least three discrete predefined positions:
a first deployed position at a pivoting angle within the range of 130°-140° relative to the stored position, such as 135° relative to the stored position,
a second deployed position at a pivoting angle within the range of 145°-155° relative to the stored position, such as 150° relative to the stored position, and
a third deployed position at a pivoting angle within the range of 175°-185° relative to the stored position, such as 180° relative to the stored position.

5. The industrial vehicle sun protector of any one of claims 1-4, wherein said mounting arrangement comprises a hook-shaped hinge and a locking member, wherein the shade member is fixedly connected to the hook-shaped hinge and follows the movements of the hook-shaped hinge, wherein the hook-shaped hinge is pivotably connected to the locking member, and is lockable to the locking member in different rotational positions relative to the locking member, said different rotational positions corresponding respectively to the stored position and the different selectable deployed positions of the shade member.

6. The industrial vehicle sun protector of claim 5, wherein one of said hook-shaped hinge and said locking member is provided with a locking pin, wherein the other one of said hook-shaped hinge and said locking member is provided with a pattern of holes or recesses that present a plurality of areas for receiving the locking pin, wherein the locking pin is selectively insertable into any one of said areas to lock said hook-shaped hinge in a desired one of said different rotational positions relative to the locking member.

7. The industrial vehicle sun protector of any one of claims 5-6, wherein the hook-shaped hinge has a first end portion, a second end portion, and an intermediate portion located between the first end portion and the second end portion, wherein the first end portion and the second end portion extend at an angle relative to each other.

8. The industrial vehicle sun protector of claim 7, wherein the pivotable connection between the hook-shaped hinge and the locking member is located at the first end portion of the hook-shaped hinge, wherein the fixed connection between the shade member and the hook-shaped hinge is located at the second end portion of the hook-shaped hinge.

9. The industrial vehicle sun protector of any one of claims 5-8, wherein the mounting arrangement comprises at least another pivotable hook-shaped hinge, wherein the shade member is fixedly connected to said at least another pivotable hook-shaped hinge.

10. The industrial vehicle sun protector of any one of claims 1-9, wherein the mounting arrangement comprises at least one spring device, such as a gas spring, wherein the spring device accumulates potential energy when the shade member is pivoted towards the stored position and wherein the spring device releases potential energy when the shade member is pivoted away from the stored position.

11. The industrial vehicle sun protector of claim 10 when dependent on claim 9, wherein the spring device has a first end connected to a remote connection point of the mounting arrangement, and a second end connected to said another pivotable hook-shaped hinge.

12. An industrial vehicle comprising a cabin for an operator and the industrial vehicle sun protector of any one of claims 1-11, wherein the mounting arrangement of the industrial vehicle sun protector is installed in the cabin.

13. The industrial vehicle of claim 12, wherein
- in the stored position, the shade member is located inside the cabin, and
- in each one of the different selectable deployed positions, the shade member is located outside the cabin and is positioned relative to an opening in the cabin to provide an obstruction to sun rays through the opening and thereby restrict passage of sun rays through the opening and onto an operator located in the cabin.

14. The industrial vehicle of any one of claims 12-13, wherein in the stored position, the shade member is held in parallel with and adjacent to the roof of the industrial vehicle.

15. The industrial vehicle of any one of claims 12-14, further comprising another industrial vehicle sun protector such that the industrial vehicle comprises two oppositely disposed industrial vehicle sun protectors attached to the roof thereof.

## Patentansprüche

1. Eine Sonnenschutzvorrichtung für Industriefahrzeuge (10) zum Schutz eines in der Kabine eines Industriefahrzeugs befindlichen Bedieners, bestehend aus:
- eine Montagevorrichtung (18), die für den Einbau in die Kabine eines Industriefahrzeugs konfiguriert ist,
- ein starres Beschattungselement (12) um den Durchgang von Sonnenstrahlen zu behindern, wobei das Beschattungselement schwenkbar mit der Montagevorrichtung verbunden ist, so dass das Beschattungselement zwischen einer gestauten Position und verschiedenen auswählbaren ausgefahrenen Positionen schwenkbar ist, wobei die Einstellung von einer der ausgefahrenen Positionen in eine andere der ausgefahrenen Positionen den Schutz des Bedieners vor Sonnenstrahlen bei verschiedenen Sonnenpositionen ermöglicht,
**dadurch gekennzeichnet, dass**
ein Schwenken des Beschattungselements aus der gestauten Position in eine der verschiedenen wählbaren ausgefahrenen Positionen zu einer Winkelverschiebung des Beschattungselements von mehr als 90° führt.

2. Sonnenschutzvorrichtung für Industriefahrzeuge nach Anspruch 1, wobei die verschiedenen auswählbaren ausgefahrenen Positionen eine Vielzahl diskreter vordefinierter ausgefahrener Positionen umfassen.

3. Sonnenschutzvorrichtung für Industriefahrzeuge nach einem der Ansprüche 1 bis 2, wobei ein Schwenken des Beschattungselements aus der gestauten Position in eine der verschiedenen wählbaren ausgefahrenen Positionen zu einer Winkelverschiebung des Beschattungselements innerhalb eines Bereichs von 130° bis 185° führt.

4. Sonnenschutzvorrichtung für Industriefahrzeuge nach einem der Ansprüche 1 bis 3, wobei die verschiedenen wählbaren ausgefahrenen Positionen mindestens drei diskrete vordefinierte Positionen umfassen:
eine erste ausgefahrene Position mit einem Schwenkwinkel innerhalb des Bereichs von 130°-140° relativ zur gestauten Position , z. B. 135° relativ zur gestauten Position ,
eine zweite ausgefahrene Position in einem Schwenkwinkel innerhalb des Bereichs von 145°-155° relativ zur gestauten Position, beispielsweise 150° relativ zur gestauten Position, und
eine dritte ausgefahrene Position mit einem Schwenkwinkel innerhalb des Bereichs von 175°-185° relativ zur gestauten Position, beispielsweise 180° relativ zur gestauten Position .

5. Sonnenschutzvorrichtung für Industriefahrzeuge nach einem der Ansprüche 1 bis 4, wobei die Montagevorrichtung ein hakenförmiges Scharnier und ein Verriegelungselement umfasst, wobei das Beschattungselement fest mit dem hakenförmigen Scharnier verbunden ist und den Bewegungen des hakenförmigen Scharniers folgt, wobei das hakenförmige Scharnier schwenkbar mit dem Verriegelungselement verbunden ist und mit dem Verriegelungselement in verschiedenen Rotationspositionen relativ zu dem Verriegelungselement verriegelbar ist, wobei die verschiedenen Rotationspositionen jeweils der gestauten Position und den verschiedenen wählbaren ausgefahrenen Positionen des Beschattungselements entsprechen.

6. Sonnenschutzvorrichtung für Industriefahrzeuge nach Anspruch 5, wobei entweder das hakenförmige Scharnier oder das Verriegelungselement mit einem Verriegelungsstift versehen ist, wobei das entsprechend andere Element, also das Verriegelungselement oder das hakenförmige Scharnier, mit einem Muster von Löchern oder Aussparungen versehen ist, die eine Vielzahl von Bereichen zur Aufnahme des Verriegelungsstifts aufweisen, wobei der Verriegelungsstift selektiv in einen der Bereiche einführbar ist, um das hakenförmige Scharnier in einer gewünschten der verschiedenen Rotationspositionen relativ zu dem Verriegelungselement zu verriegeln.

7. Sonnenschutzvorrichtung für Industriefahrzeuge nach einem der Ansprüche 5 bis 6, wobei das hakenförmige Scharnier einen ersten Endabschnitt, einen zweiten Endabschnitt und einen Zwischenabschnitt aufweist, der sich zwischen dem ersten Endabschnitt und dem zweiten Endabschnitt befindet, wobei der erste Endabschnitt und der zweite Endabschnitt in einem Winkel zueinander verlaufen.

8. Sonnenschutzvorrichtung für Industriefahrzeuge nach Anspruch 7, wobei sich die schwenkbare Verbindung zwischen dem hakenförmigen Scharnier und dem Verriegelungselement am ersten Endabschnitt des hakenförmigen Scharniers befindet, wobei sich die feste Verbindung zwischen dem Beschattungselement und dem hakenförmigen Scharnier am zweiten Endabschnitt des hakenförmigen Scharniers befindet.

9. Sonnenschutzvorrichtung für Industriefahrzeuge nach einem der Ansprüche 5 bis 8, wobei die Montagevorrichtung mindestens ein weiteres schwenkbares hakenförmiges Scharnier umfasst, wobei das Beschattungselement fest mit dem mindestens weiteren schwenkbaren hakenförmigen Scharnier verbunden ist.

10. Sonnenschutzvorrichtung für Industriefahrzeuge nach einem der Ansprüche 1 bis 9, wobei die Montagevorrichtung mindestens eine Federvorrichtung, wie z. B. eine Gasfeder, umfasst, wobei die Federvorrichtung potenzielle Energie speichert, wenn das Beschattungselement in Richtung der gestauten Position geschwenkt wird, und wobei die Federvorrichtung potenzielle Energie freigibt, wenn das Beschattungselement aus der gestauten Position weggeschwenkt wird.

11. Sonnenschutzvorrichtung für Industriefahrzeuge nach Anspruch 10 in Abhängigkeit von Anspruch 9, wobei die Federvorrichtung ein erstes Ende hat, das mit einem entfernten Verbindungspunkt der Montagevorrichtung verbunden ist, und ein zweites Ende, das mit dem anderen schwenkbaren hakenförmigen Scharnier verbunden ist.

12. Industriefahrzeug mit einer Kabine für einen Bediener und dem Sonnenschutzvorrichtung für Industriefahrzeuge nach einem der Ansprüche 1-11, wobei die Montageanordnung der Sonnenschutzvorrichtung in der Kabine installiert ist.

13. Industriefahrzeug nach Anspruch 12, wobei
- sich das Beschattungselement in der gestauten Position im Inneren der Kabine befindet, und
- sich das Beschattungselement in jeder der verschiedenen wählbaren ausgefahrenen Positionen außerhalb der Kabine befindet und relativ zu einer Öffnung in der Kabine so positioniert ist, dass es ein Hindernis für Sonnenstrahlen durch die Öffnung bildet und dadurch den Durchgang von Sonnenstrahlen durch die Öffnung und auf einen in der Kabine befindlichen Bediener beschränkt.

14. Industriefahrzeug nach einem der Ansprüche 12 bis 13, wobei das Beschattungselement in der gestauten Position parallel zum Dach des Industriefahrzeugs und an dieses angrenzend gehalten wird.

15. Industriefahrzeug nach einem der Ansprüche 12 bis 14 umfassend ferner eine weitere Sonnenschutzvorrichtung für Industriefahrzeuge, so dass das Industriefahrzeug zwei gegenüberliegend angeordnete Sonnenschutzvorrichtungen umfasst, die an seinem Dach angebracht sind.

## Revendications

1. Pare-soleil (10) pour véhicule industriel pour la protection d'un opérateur situé dans la cabine d'un véhicule industriel, comprenant :
- un agencement de montage (18) configuré pour être installé dans la cabine d'un véhicule industriel ;
- un élément d'ombrage rigide (12) pour obstruer le passage des rayons du soleil à travers celui-ci, l'élément d'ombrage étant relié de manière pivotante à l'agencement de montage de sorte que l'élément d'ombrage peut pivoter entre une position rangée et différentes positions déployées sélectionnables, dans lequel le réglage de l'une des positions déployées à une autre des positions déployées permet de protéger l'opérateur des rayons du soleil à différentes positions du soleil, **caractérisé en ce qu'**un pivotement de l'élément d'ombrage depuis la position rangée vers l'une quelconque des différentes positions déployées sélectionnables entraîne un déplacement angulaire de l'élément d'ombrage supérieur à 90°.

2. Pare-soleil pour véhicule industriel selon la revendication 1, dans lequel lesdites différentes positions déployées sélectionnables comprennent une pluralité de positions déployées prédéfinies distinctes.

3. Pare-soleil pour véhicule industriel selon l'une quelconque des revendications 1 à 2, dans lequel un pivotement de l'élément d'ombrage depuis la position rangée vers l'une quelconque des différentes positions déployées sélectionnables entraîne un déplacement angulaire de l'élément d'ombrage dans une plage de 130° à 185°.

4. Pare-soleil pour véhicule industriel selon l'une quelconque des revendications 1 à 3, dans lequel lesdites différentes positions déployées sélectionnables comprennent au moins trois positions prédéfinies distinctes :
une première position déployée à un angle de pivotement dans la plage de 130° à 140° par rapport à la position rangée, telle que 135° par rapport à la position rangée,
une deuxième position déployée à un angle de pivotement dans la plage de 145° à 155° par rapport à la position rangée, telle que 150° par rapport à la position rangée, et
une troisième position déployée à un angle de pivotement dans la plage de 175° à 185° par rapport à la position rangée, telle que 180° par rapport à la position rangée.

5. Pare-soleil pour véhicule industriel selon l'une quelconque des revendications 1 à 4, dans lequel ledit agencement de montage comprend une charnière en forme de crochet et un élément de verrouillage, dans lequel l'élément d'ombrage est relié de manière fixe à la charnière en forme de crochet et suit les mouvements de la charnière en forme de crochet, dans lequel la charnière en forme de crochet est reliée de manière pivotante à l'élément de verrouillage, et peut être verrouillée sur l'élément de verrouillage dans différentes positions de rotation par rapport à l'élément de verrouillage, lesdites différentes positions de rotation correspondant respectivement à la position rangée et aux différentes positions déployées sélectionnables de l'élément d'ombrage.

6. Pare-soleil pour véhicule industriel selon la revendication 5, dans lequel l'un de ladite charnière en forme de crochet et dudit élément de verrouillage est doté d'une goupille de verrouillage, dans lequel l'autre de ladite charnière en forme de crochet et dudit élément de verrouillage est doté d'un motif de trous ou d'évidements qui présentent une pluralité de zones pour recevoir la goupille de verrouillage, dans lequel la goupille de verrouillage peut être sélectivement insérée dans l'une quelconque desdites zones pour verrouiller ladite charnière en forme de crochet dans une position souhaitée parmi lesdites différentes positions de rotation par rapport à l'élément de verrouillage.

7. Pare-soleil pour véhicule industriel selon l'une quelconque des revendications 5 à 6, dans lequel la charnière en forme de crochet présente une première partie d'extrémité, une deuxième partie d'extrémité et une partie intermédiaire située entre la première partie d'extrémité et la deuxième partie d'extrémité, dans lequel la première partie d'extrémité et la deuxième partie d'extrémité s'étendent selon un angle l'une par rapport à l'autre.

8. Pare-soleil pour véhicule industriel selon la revendication 7, dans lequel la liaison pivotante entre la charnière en forme de crochet et l'élément de verrouillage est située au niveau de la première partie d'extrémité de la charnière en forme de crochet, dans lequel la liaison fixe entre l'élément d'ombrage et la charnière en forme de crochet est située au niveau de la deuxième partie d'extrémité de la charnière en forme de crochet.

9. Pare-soleil pour véhicule industriel selon l'une quelconque des revendications 5 à 8, dans lequel l'agencement de montage comprend au moins une autre charnière en forme de crochet pivotante, dans lequel l'élément d'ombrage est relié de manière fixe à ladite au moins une autre charnière en forme de crochet pivotante.

10. Pare-soleil pour véhicule industriel selon l'une quelconque des revendications 1 à 9, dans lequel l'agencement de montage comprend au moins un dispositif à ressort, tel qu'un ressort à gaz, dans lequel le dispositif à ressort accumule une énergie potentielle lorsque l'élément d'ombrage est pivoté vers la position rangée et dans lequel le dispositif à ressort libère une énergie potentielle lorsque l'élément d'ombrage est pivoté à distance de la position rangée.

11. Pare-soleil pour véhicule industriel selon la revendication 10 lorsqu'elle dépend de la revendication 9, dans lequel le dispositif à ressort présente une première extrémité reliée à un point de liaison distant de l'agencement de montage, et une deuxième extrémité reliée à ladite autre charnière en forme de crochet pivotante.

12. Véhicule industriel comprenant une cabine pour un opérateur et le pare-soleil pour véhicule industriel selon l'une quelconque des revendications 1 à 11, dans lequel l'agencement de montage du pare-soleil pour véhicule industriel est installé dans la cabine.

13. Véhicule industriel selon la revendication 12, dans lequel
- dans la position rangée, l'élément d'ombrage est situé à l'intérieur de la cabine, et
- dans chacune des différentes positions déployées sélectionnables, l'élément d'ombrage est situé à l'extérieur de la cabine et est positionné par rapport à une ouverture dans la cabine pour fournir une obstruction aux rayons du soleil à travers l'ouverture et ainsi limiter le passage des rayons du soleil à travers l'ouverture et au niveau d'un opérateur situé dans la cabine.

14. Véhicule industriel selon l'une quelconque des revendications 12 à 13, dans lequel, dans la position rangée, l'élément d'ombrage est maintenu parallèlement et de manière adjacente au toit du véhicule industriel.

15. Véhicule industriel selon l'une quelconque des revendications 12 à 14, comprenant en outre un autre pare-soleil pour véhicule industriel de sorte que le véhicule industriel comprend deux pare-soleil pour véhicule industriel disposés à l'opposé fixés sur le toit de celui-ci.
